# EUROPEAN PATENT APPLICATION

(11) **EP 2 719 954 A2**
(43) Date of publication of application: **16.04.2014**
(21) Application number: 12785050.1
(22) Date of filing: 15.05.2012
(51) Int. Cl.: F24C 7/08, H05B 6/06, H02J 9/00

(54) **APPARATUS FOR SAVING STANDBY POWER IN A MICROWAVE OVEN**

(30) Priority: 16.05.2011 KR 20110045625
(71) Applicant: Dongbu Daewoo Electronics Corporation, Seoul 100-031 (KR)
(72) Inventor: KO, Seung Jin, Seoul 150-042 (KR)
(74) Representative: Michalski Hüttermann & Partner Patentanwälte
(86) International application number: PCT/KR2012/003803
(87) International publication number: WO 2012/157943

(57) **Abstract**

An apparatus for saving standby power in a microwave oven includes a power switch configured to power on the microwave oven, having a first contact point; a power saving button configured to power off the microwave oven; a power saving relay connected in parallel to the power switch and having a second contact point to the power supply to the microwave oven that is turned on or off according to a control signal; and a control unit configured to turn on the second contact point when the first contact point is turned on, and turn off the second contact point when the power saving button is pressed.

## Description

### [Technical Field]

The present invention relates to an apparatus for saving standby power in a microwave oven, and more particularly, to an apparatus for saving standby power in a microwave oven that is capable of blocking further dissipation or consumption of power using a power saving button in a standby mode.

### [Background Art]

The power consumption of electric and electronic products may be classified into rated power consumption (i.e., during operation of the products) and standby power consumption. According to recent trends, standby power consumption and rated power consumption are considered to be very important, to such a degree that the standby power consumption is adopted as a product standard.

In general, a microwave oven includes a magnetron for generating microwaves, a high voltage transformer for converting an input AC voltage into a high DC voltage to drive a heater, and a low voltage transformer for generating low-voltage power required for operating electric parts or electronic parts.

When a power plug of the microwave oven is inserted into a receptacle, an input AC voltage is applied to the high voltage transformer and the low voltage transformer, and voltages transformed by the transformers are supplied to a load circuit including various parts. Furthermore, specific parts which are operated according to a food cooking process of the microwave oven receive a voltage through a relay controlled by a microcomputer.

The above-described configuration is related art for helping an understanding of the present invention, and does not necessarily mean related art which is widely known in the technical field to which the present invention pertains.

### [Disclosure]

### [Technical Problem]

Most home appliances used in general homes are operated by manipulating a power switch or start switch when a power plug connected to the products is connected to an external AC power supply. Furthermore, even after the products are used, the power plug is continuously left connected to the external AC power supply in most cases.

When most users want to use a product, or after the users use the product, connecting and/or disconnecting the power plug to/from the external AC power supply may be inconvenient to the users. Thus, the users usually leave the power plug connected to the external AC power supply even after the product is used.

In this case, the product continuously consumes power. Although a large amount of power is not consumed in comparison with when the product is driven, a microcomputer and a display unit for monitoring the operation state of the product continuously consumes power to maintain an operational state in which power is applied.

As the power is consumed for a long time in such a standby mode, a considerable amount of power may be consumed.

The present invention is conceived and/or created to solve such problems of the related art, and an aspect of the invention is to provide an apparatus for saving standby power in a microwave oven, which is capable of forcibly blocking or cutting off standby power consumption through a power saving button.

### [Technical Solution]

According to an aspect of the invention, an apparatus for saving standby power in a microwave oven includes a power switch configured to power on the microwave oven, the power switch having a first contact point; a power saving button configured to power off the microwave oven; a power saving relay connected in parallel to the power switch and having a second contact point to a power supply to the microwave oven that is turned on or off according to a control signal; and a control unit configured to turn on the second contact point (of the power saving relay) when the first contact point (of the power switch) is turned on, and turn off the second contact point (of the power saving relay) when the power saving button powers off the microwave oven.

The control unit may automatically turn off the second contact point (of the power saving relay) a preset standby time after completion of a cooking operation of the microwave oven.

The power switch may include a normal open (NC)-type switch that is turned on when the power switch powers on the microwave oven.

According to another aspect of the present invention, an apparatus for saving standby power in a microwave oven includes an external AC power supply unit; a low voltage transformer; a power switch connected between the external AC power supply unit and the low voltage transformer, having a first contact point which is turned on when the power switch is in a first state (e.g., it powers on the microwave oven or is pressed); a power saving relay connected in parallel to the power switch between the external AC power supply unit and the low voltage transformer, having a second contact point which is turned on or off according to a control signal; a power saving button configured to turn off the second contact point (of the power saving relay); and a control unit configured to turn on the second contact point (of the power saving relay) when the first contact point (of the power switch) is turned on, turn off the second contact point (of the power saving relay) when the power saving button is in a first state (e.g., it powers off the microwave oven or is pressed), and automatically turn off the second contact point (of the power saving relay) a preset standby time after completion of a cooking operation of the microwave oven.

### [Advantageous Effects]

According to embodiments of the invention, the standby power consumption of the microwave oven may be forcibly blocked or cut off using the power saving button, which makes it possible to reduce standby power loss.

Furthermore, when a user wants to use the microwave oven, or after the user uses the microwave oven, the user can avoid inserting and/or withdrawing the power plug into and/or from the receptacle to save standby power, and instead, use a simple button operation. Thus, the present apparatus and power-saving method may be very convenient for energy-conscious users.

Furthermore, standby power consumption is automatically blocked or cut off a preset or predetermined time after completion of a cooking operation of the microwave oven, thereby reducing standby power loss.

### [Description of Drawings]

The above and other aspects, features and advantages of the invention will become apparent from the following detailed description in conjunction with the accompanying drawings, in which:
FIG. 1 is a diagram illustrating an exemplary configuration of an apparatus for saving standby power in a microwave oven in accordance with one or more embodiments of the present invention; and
FIGS. 2 and 3 are flowcharts for explaining exemplary operations of the apparatus for saving standby power in the microwave oven in accordance with embodiment(s) of the present invention.

### [Detailed Description]

Embodiments of the invention will hereinafter be described in detail with reference to the accompanying drawings. It should be noted that the drawings are not necessarily to precise scale and may be exaggerated in the thickness of lines or sizes of components for descriptive convenience and clarity only. Furthermore, the terms as used herein are defined by taking functions of the invention into account and can be changed according to the custom or intention of users or operators. Therefore, any definition of the terms should be made according to the overall disclosures set forth herein.

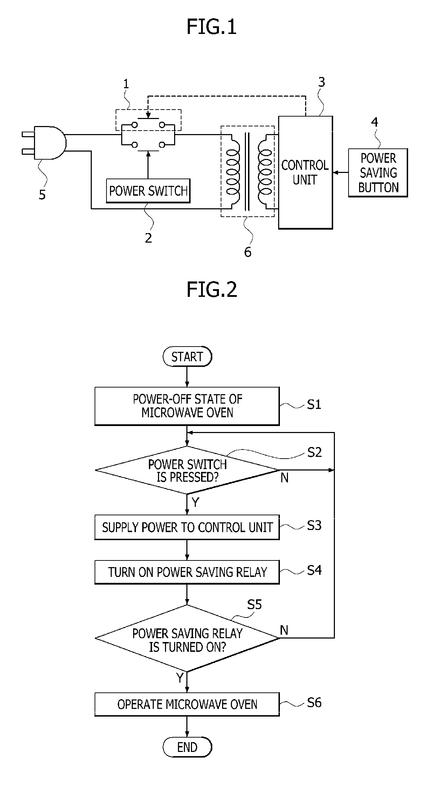

FIG. 1 is a diagram illustrating the configuration of an exemplary apparatus for saving standby power in a microwave oven in accordance with embodiment(s) of the present invention.

Referring to FIG. 1, the apparatus for saving standby power in the microwave oven in accordance with embodiment(s) of the present invention includes a power saving relay 1, a power switch 2, a control unit 3, and a power saving button 4.

The power switch 2 is a switch for powering on the microwave oven. The power switch 2 is a normal open (NC) type switch, in which a switch contact is turned on when the switch is in a first state (e.g., closed, pressed, or otherwise configured to power on the microwave oven) and turned off when the switch is in a second state (e.g., open, released, or otherwise configured to disconnect power from the microwave oven). The power switch 2 is connected between an external AC power supply unit 5 and a low voltage transformer 6. When the user presses the power switch 2, a contact point of the power switch 2 is connected to supply power from the external AC power supply unit 5 to the low voltage transformer 6.

The power saving relay 1 is connected in parallel to the power switch 2 between the external AC power supply unit 5 and the low voltage transformer 6. The power saving relay 1 has a contact point that is turned on or off according to a control signal from the control unit 3. When the contact point of the power saving relay 1 is turned on, power is supplied to the low voltage transformer 6 from the external AC power supply unit 5. When the contact point of the power saving relay 1 is turned off, the power supplied to the low voltage transformer 6 is cut off.

The power saving button 4 is a push button for forcibly powering off the microwave oven. When a user presses the power saving button 4, a signal is input into the control unit 3.

When a user presses the power switch 2, power supplied from the external AC power supply unit 5 is supplied to the control unit 3 through the low voltage transformer 6. At this time, the control unit 3 turns on the power saving relay 1. Then, although the user removes his/her hand, finger or other source of pressure from the power switch 2, power from the external AC power supply unit 5 is supplied to the low voltage transformer 6 because the contact point of the power saving relay 1 is turned on.

Furthermore, when the user presses the power saving button 4, the control unit 3 turns off the contact point of the power saving relay 1. That is, when the power saving button 4 is pressed by the user, the control unit 3 forcibly turns off or disconnect the contact point of the power saving relay 1 so as to cut off the power supplied from the external AC power supply unit 5, thereby blocking standby power consumption in the standby mode.

As such, the control unit 3 performs a control operation to turn on the power contact of the power saving relay 1 when the contact point of the power switch 2 is turned on, and turn off the power contact of the power saving relay 1 when the power saving button 4 is pressed.

Furthermore, the control unit 3 performs a second control operation to automatically turn off the contact point of the power saving relay 1 a preset or predetermined time after completion of a cooking operation of the microwave oven

In accordance with embodiment(s) of the present invention, when a user wants to use the microwave oven, the user powers on the microwave oven using the power switch 2. When the preset standby time passes, the contact point of the power saving relay 1 may be automatically turned off to block or cut off standby power consumption.

Furthermore, when the user wants to save power, the user may forcibly cut off standby power to the microwave oven using the power saving button 4, thereby blocking or preventing loss of standby power.

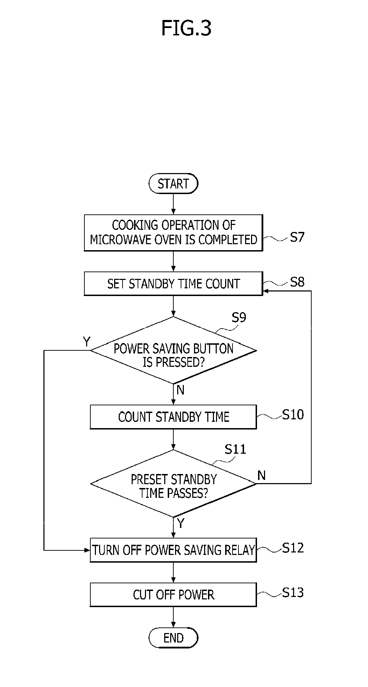

FIGS. 2 and 3 are flowcharts for explaining exemplary operations of the apparatus for saving standby power in the microwave oven in accordance with embodiment(s) of the present invention.

Referring to FIG. 2, an operation of powering on the microwave oven will be described as follows.

When the microwave oven is powered off at step S1, whether or not the power switch 2 is pressed by a user is determined at step S2.

When the power switch 2 is pressed by the user, power supplied from the external AC power supply unit 5 is supplied to the low voltage transformer 6, and the low voltage transformer 6 generates low voltage power for operating the control unit 3. The low voltage power is supplied to the control unit 3 at step S3.

At this time, the control unit 3 turns on the power contact of the power saving relay 1 at step S4.

That is, since the contact point of the power saving relay 1 is turned on, even though the user removes pressure from the power switch 2, power from the external AC power supply unit 5 is supplied to the low voltage transformer 6.

While the power saving relay 1 is turned on, the respective parts of the microwave oven receive power from the low voltage transformer 6 at step S5, and the microwave oven receiving the power can be operated according to one or more manipulations by and/or electronic instructions from the user at step S6.

Referring to FIG. 3, an exemplary operation of powering off the microwave oven will be described as follows.

When a cooking operation of the microwave oven is completed at step S7, the control unit 3 sets a standby time count at step S8, and checks whether or not the power saving button 4 is pressed at step S9.

At this time, when the power saving button 4 is pressed, the control unit 3 turns off the contact point of the power saving relay 1 at step S12.

That is, when the power saving button 4 is pressed by the user, the control unit 3 forcibly turns off or disconnects the contact point of the power saving relay 1 so as to cut off the power supplied from the external AC power supply unit 5, thereby blocking and/or cutting off the standby power consumption in the standby mode, at step S13.

On the other hand, when the power saving button 4 is not pressed, the control unit 3 counts a standby time at step S10. When the preset standby time passes at step S11, the control unit 3 turns off the contact point of the power saving relay 1 at step S12.

That is, when the preset standby time passes after a cooking operation of the microwave oven is completed, the control unit 3 automatically turns off the contact point of the power saving relay 1.

In accordance with embodiment(s) of the present invention, when a user wants to use the microwave oven, the user may turn on the microwave oven using the power switch 2. After the microwave oven is used, the user may cut off the power using the power saving button 4. Thus, such a simple button operation makes it possible to avoid inserting and withdrawing a power plug into and from a receptacle when the user wants to save standby power in the microwave oven between uses (e.g., cooking operations) of the microwave oven.

Furthermore, the standby power of the microwave is forcibly blocked or cut off using the power saving button 4, thereby blocking or preventing loss of standby power.

Although some embodiments have been provided to illustrate the invention in conjunction with the drawings, it will be apparent to those skilled in the art that the embodiments are given by way of illustration only, and that various modifications and equivalent embodiments can be made without departing from the spirit and scope of the invention. The scope of the invention should be limited only by the accompanying claims.

## Claims

1. An apparatus for saving standby power in a microwave oven, comprising:
a power switch configured to power on the microwave oven, the power switch having a first contact point;
a power saving button configured to power off the microwave oven;
a power saving relay connected in parallel to the power switch and having a second contact point to a power supply to the microwave oven that is turned on or off according to a control signal; and
a control unit configured to turn on the second contact point when the first contact point is turned on, and turn off the second contact point when the power saving button is pressed.

2. The apparatus of claim 1, wherein the control unit automatically turns off the second contact point a preset standby time after completion of a cooking operation of the microwave oven.

3. The apparatus of claim 1, wherein the power switch comprises a normal open (NC)-type switch that is turned on when the power switch powers on the microwave oven.

4. An apparatus for saving standby power in a microwave oven, comprising:
an external AC power supply unit;
a low voltage transformer;
a power switch connected between the external AC power supply unit and the low voltage transformer, having a first contact point which is turned on when the power switch is pressed;
a power saving relay connected in parallel to the power switch between the external AC power supply unit and the low voltage transformer, having a second contact point that is turned on or off according to a control signal;
a power saving button configured to turn off the second contact point; and
a control unit configured to turn on the second contact point when the first contact point is turned on, turn off the second contact point when the power saving button is pressed, and automatically turn off the second contact point a preset standby time after completion of a cooking operation of the microwave oven.
